# EUROPEAN PATENT SPECIFICATION

(11) **EP 3 735 660 B1**
(45) Date of publication and mention of the grant of the patent: **18.11.2026**
(21) Application number: 18898159.1
(22) Date of filing: 12.12.2018
(51) Int. Cl.: G06N 3/063, G06N 3/045, G06N 3/0464, G06V 10/82, G06V 30/19

(54) **SYSTEMS AND METHODS FOR HARDWARE-BASED POOLING**
SYSTEME UND VERFAHREN ZUM HARDWARE-BASIERTEN POOLEN
SYSTÈMES ET PROCÉDÉS DE REGROUPEMENT SUR BASE MATÉRIELLE

(30) Priority: 04.01.2018 US 201815862369
(43) Date of publication of application: 11.11.2020
(73) Proprietor: Tesla, Inc., Austin, TX 78725 (US)
(72) Inventor: BANNON, Peter Joseph, Woodside, California 94062 (US); HURD, Kevin Altair, Redwood City, California 94061 (US)
(74) Representative: Liesegang, Eva
(86) International application number: PCT/US2018/065290
(87) International publication number: WO 2019/135873

(56) References cited:
- US-A1- 2016 342 889
- US-A1- 2016 342 893
- US-A1- 2016 342 893
- US-A1- 2017 103 298

## Description

### CROSS REFERENCE TO RELATED PATENT APPLICATIONS

This application claims the priority to commonly owned U.S. Pat. App. No. 15/862,369 (Docket No. 20150-2167), filed on January 4, 2018, entitled "SYSTEMS AND METHODS FOR HARDWARE-BASED POOLING," listing Peter Joseph Bannon, and Kevin Altair Hurd as inventors.

### A. Technical Field

The present disclosure relates generally to systems and methods for improving utilization of computing resources, such as computational power and storage requirements. More particularly, the present disclosure is related to systems and methods for improving efficiency of arithmetic processes in computer vision applications that use convolutional neural network (CNN) architectures to generate convolutional and pooling data.

### B. Background

Neural network-based image classifiers are achieving significant improvements in automatically learning complex features for classification and object recognition. For example, a Convolutional Neural Network (CNN) model may be used to automatically determine whether an image can be categorized as comprising a person or animal. The CNN applies a number of hierarchical network layers and sub-layers to an input image when making a determination or prediction. One characteristic of CNNs is that each network layer serves as an output of a previous layer, typically starting at a first convolutional layer and ending with one or more final layers, e.g., a fully connected layer that includes nodes whose activation values deliver scores that indicate a likelihood that the input image can indeed be classified as comprising a certain object.

A convolution layer may use several filters known as kernels or activation functions that apply to the pixels of a convolution window of an image a set of weights. The weights have been learned by the CNN during a training phase to generate an activation value associated with that window. For each filter, the convolution layer may have, for each pixel, one node, i.e., neuron, that outputs an activation value that is calculated based on the set of weights. The activation value for the convolution window identifies a feature or characteristic, such as an edge that can be used to identify the feature at other locations within the image. Since all nodes for a filter can share the same set of weights, reusing weights is a common technique to increase utilization of both storage space and computation time.

Among the most important types of layers of a CNN is the pooling layer-a basic, independent building block that is typically placed after a convolutional layer. As applied to images, a pooling layer allows the network to determine a feature map and learn a set of features for the image. Pooling is viewed as a form of nonlinear sub-sampling or down-sampling that uses a nonlinear function, such as max-pooling or average-pooling, to reduce the number of neurons when progressing from layer to layer through the network; thereby, reducing the amount of computation and further increasing computational performance.

Pooling generally involves sliding a pooling window, e.g., a two-dimensional square of multiple pixels in width and multiple pixels in height, stepwise across small, non-overlapping areas (i.e., receptive field) of the output of a preceding convolution layer. Aggregating the values of the group of neurons in that area provides single output values (e.g., integers) for each group in a local neighborhood. These output values assigned to each group are passed to a subsequent layer without performing a convolution and depend on the type of pooling function (e.g., average or max) that is used in the pooled area. The size and location of the pooling window depends on the pooling stride (i.e., interval or step size) and the location of the output pixel. Oftentimes, the last pooling layer is followed by the final output layer (e.g., a fully connected layer with a soft-max nonlinearity) of the CNN architecture that outputs the final prediction, e.g., as an estimate of a conditional probability, for each particular class.

US2016/342893 A1 and US2016/342889 A1 disclose examples of pooling mechanisms for neural network accelerators.

While great progress has been achieved in improving the performance of convolutional layers by sharing of weights and improving arithmetic logic unit utilization, pooling layers, which are similarly computationally intensive, have been neglected mainly due to constraints inherent to existing neural network architectures.

Accordingly, it would be desirable to have systems and methods that improve the performance of pooling layers in neural networks to further increase the utilization end performance of available computational resources to reduce overall computational cost.

### BRIEF DESCRIPTION OF THE DRAWINGS

References will be made to embodiments of the invention, examples of which may be illustrated in the accompanying figures. These figures are intended to be illustrative, not limiting. Although the invention is generally described in the context of these embodiments, it should be understood that it is not intended to limit the scope of the invention to these particular embodiments.
FIGURE ("FIG.") 1 is an exemplary block diagram of a system that uses a pooling unit for performing pooling operations according to various embodiments of the present disclosure.
**FIG.** 2 is an exemplary block diagram of a pooling unit architecture according to various embodiments of the present disclosure.
**FIG.** 3 is a flowchart of an illustrative process for using a pooling system shown in FIG. 1.
**FIG.** 4 is a flowchart of an illustrative process for using the pooling unit architecture shown in **FIG. 2****.**
**FIG.** 5 is a flowchart of an illustrative process for performing pooling operations according to various embodiments of the present disclosure.

### DETAILED DESCRIPTION OF EMBODIMENTS

In the following description, for purposes of explanation, specific details are set forth in order to provide an understanding of the invention. It will be apparent, however, to one skilled in the art that the invention can be practiced without these details. Furthermore, one skilled in the art will recognize that embodiments of the present invention, described below, may be implemented in a variety of ways, such as a process, an apparatus, a system, a device, or a method on a tangible computer-readable medium. The invention is defined by the claims.

Components, or modules, shown in diagrams are illustrative of exemplary embodiments of the invention and are meant to avoid obscuring the invention. It shall also be understood that throughout this discussion that components may be described as separate functional units, which may comprise sub-units, but those skilled in the art will recognize that various components, or portions thereof, may be divided into separate components or may be integrated together, including integrated within a single system or component. It should be noted that functions or operations discussed herein may be implemented as components. Components may be implemented in software, hardware, or a combination thereof.

Furthermore, connections between components or systems within the figures are not intended to be limited to direct connections. Rather, data between these components may be modified, re-formatted, or otherwise changed by intermediary components. Also, additional or fewer connections may be used. It shall also be noted that the terms "coupled," "connected," or "communicatively coupled" shall be understood to include direct connections, indirect connections through one or more intermediary devices, and wireless connections.

Reference in the specification to "one embodiment," "preferred embodiment," "an embodiment," or "embodiments" means that a particular feature, structure, characteristic, or function described in connection with the embodiment is included in at least one embodiment of the invention and may be in more than one embodiment. Also, the appearances of the above-noted phrases in various places in the specification are not necessarily all referring to the same embodiment or embodiments.

The use of certain terms in various places in the specification is for illustration and should not be construed as limiting. A service, function, or resource is not limited to a single service, function, or resource; usage of these terms may refer to a grouping of related services, functions, or resources, which may be distributed or aggregated. Furthermore, the use of memory, database, information base, data store, tables, hardware, and the like may be used herein to refer to system component or components into which information may be entered or otherwise recorded.

Furthermore, it shall be noted that: (1) certain steps may optionally be performed; (2) steps may not be limited to the specific order set forth herein; (3) certain steps may be performed in different orders; and (4) certain steps may be done concurrently.

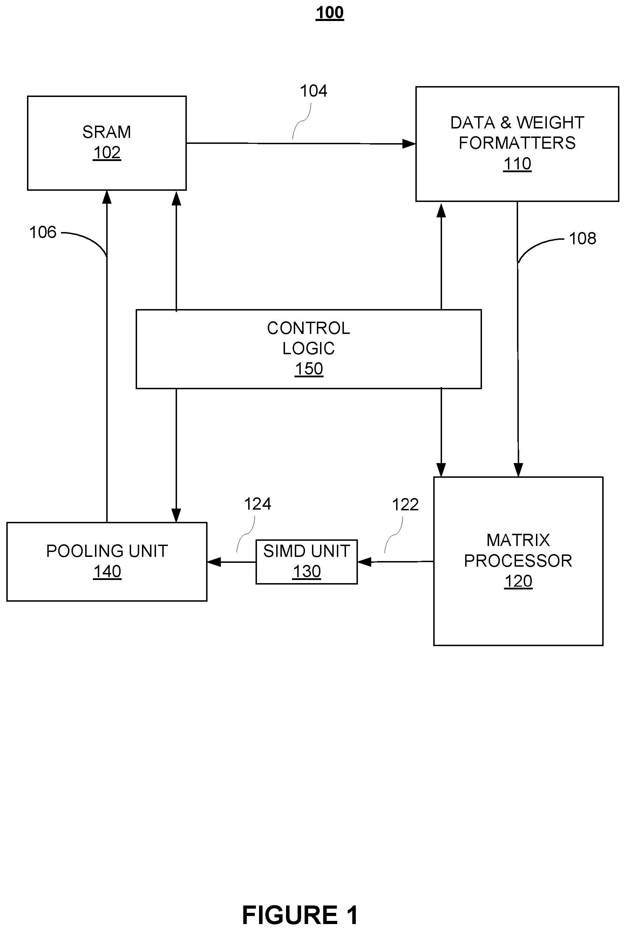

**FIG.** 1 is an exemplary block diagram of a system that uses a pooling unit for performing pooling operations according to various embodiments of the present disclosure. System 100 comprises SRAM 102, data/weight formatter 110, matrix processor 120, post-processing unit 130, pooling unit 140, control logic 150. It is understood that system 100 may comprise additional circuits and sub-circuits, such as logic circuitry and/or control circuitry, caches, local buffers, comparators, state machines, additional post processing units, and auxiliary devices that perform management functions.

In embodiments, any component in system 100 may be partially or entirely controlled by control logic 150 that may monitor the status and operations of system 100, e.g., when performing an operation such as a convolution or other mathematical calculation, and calculate locations from which to retrieve data that will be used in a subsequent step of the operation. Similarly, control logic 150 may manage other components, e.g., components that are not shown in FIG. 1 and/or outside of system 100.

In embodiments, SRAM 102 stores and makes accessible input image data, e.g., in a data input matrix and a weight input matrix 104. One skilled in the art will recognize that other types of storage devices may be used.

In embodiments, based on the weight input matrix and data input matrix 104, data/weight formatter 110 produces two outputs 108, e.g., each 96-columns wide, for matrix processor 120, which may process a very large number of elements of a matrix in parallel to efficiently map data into a matrix operation. Data/weight formatter 110 may be implemented as any number of in-line formatters that convert, e.g., data input matrices and weight input matrices 104 into a suitable format for further processing by matrix processor 120, e.g., according to specific hardware requirements of matrix processor 120. In embodiments, formatter 110 converts two-dimensional or three-dimensional matrices into a single vector or string that may be represented by a row or column before making the so linearized or vectorized data available as input 108 to matrix processor 120. As a result, matrix processor 120 can be efficiently utilized to execute a matrix multiply operation as part of a convolution computation in system 100 to generate output array 122 that then may be reassembled, e.g., into an image.

A neural network model using the embodiments of the present disclosure may comprise a pooling network that uses max-pooling layers, averaging pooling layers, and other neural network layers. The pooling network may be followed or preceded by, e.g., (by a processing module that uses a fully-connected layer and), in embodiments, an activation layer that uses a known function, such as a non-linear function, e.g., a Rectified Linear Unit (ReLU), logistic sigmoid function, and the like.

**In** embodiments, matrix processor 120 performs a convolution operation by applying individual filters (e.g., weights) to input image data to detect small features within an input image. By analyzing a sequence of different features in a different order, macro features may so be identified in the input image. Matrix processor 120 may use a different set of weights for each input channel, as each input channel may contain a different set of information, and each weight matrix may be used detect a different feature. In embodiments, matrix processor 120 multiplies a rectangular input matrix with a rectangular weight matrix to obtain partial dot products that may then be summed to generate an accumulated dot product, i.e., an integer, which represents an output pixel in an output image. In embodiments, output array 122 may correspond to the dot product of two matrices 108 that have been processed by formatter 110.

**In** embodiments, matrix processor 120 may perform convolution operations that convolve an input with a filter to generate output 122 by converting a convolution operation into a matrix multiplication (e.g., a 96 x 96 matrix multiplication). Matrix processor 120 may comprise circuitry, such as arithmetic logic units, registers, encoders and may be implemented as having an arbitrary number of columns and rows to perform mathematical accelerated operations across a large set of data and weights. These large-scale operations may be timed according to the specific hardware requirements of matrix processor 120 to accelerate convolution operations, e.g., by reducing redundant operations within system 100 and by implementing hardware specific logic.

In embodiments, matrix processor 120 outputs 122 a linearized vector or array representing an output channel that may be stored in storage within post-processing unit 130. In embodiments, pooling unit 140 operates on a single output channel of matrix processor 120, such that output 122 or post-processed output 124 is an array that may otherwise not conveniently map into a matrix operation. Therefore, in embodiments, output array 122 may be reformatted into a suitable format for pooling unit 140 to increase the efficiency of system 100.

In contrast, conventional implementations that employ a vector engine that performs vector operations on a stored convolution would lead to rather complex and inefficient pooling operations the output of a highly efficiency matrix processor, such as matrix processor 120, in part, because some values in output array 122 may be adjacent while others may not. In short, a pooling algorithm following a convolution operation by matrix processor 120 would have to process a combination of values in output array 122 that are not presented in a convenient shape or format for common pooling methods. Therefore, in embodiments, output array 122 is reformatted in order to allow for the application of improved pooling methods to a high-efficiency matrix processor 120.

To achieve this, in embodiments, hardware pooling unit 140, in response to receiving output array 122, e.g., as processed by post-processing unit 130, reformats the received data into a grid format, such that some elements of output array 122 are aligned in a vertical direction and others are aligned in a horizontal direction, such that pooling can be directly applied without the need to perform cumbersome, computational-intensive intermediate steps and data storage operations. In embodiments, formatter 110 reformats different shapes of input matrix data into columns and rows suitable for matrix processor 120. In embodiments, formatting may be performed dynamically to accommodate processing of matrices that have differing input sizes.

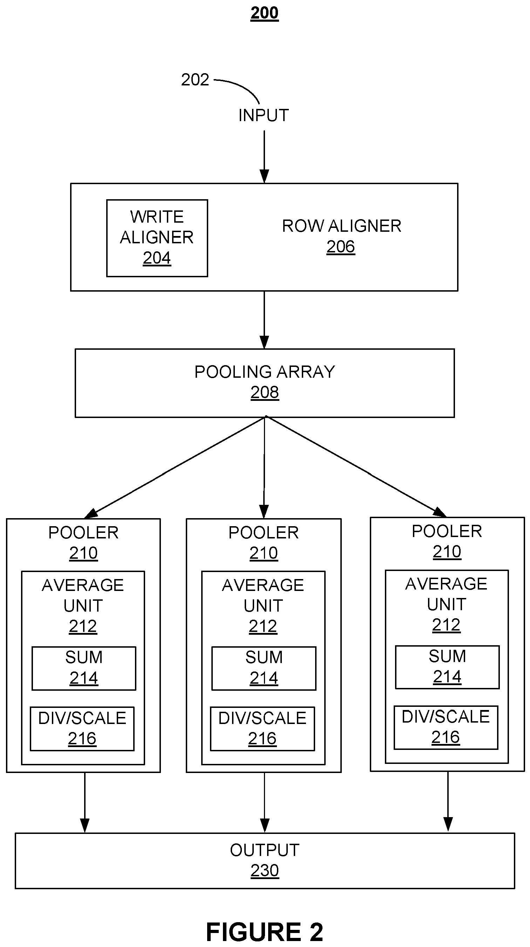

In embodiments, pooling unit 140 applies a pooling function, e.g., average pooling and max pooling, to the reformatted data in order to generate and output pooled data 106 that is then written and stored in SRAM 102, e.g., as a feature map. The internal operation of pooling unit 140 will be described in more detail with respect to FIG. 2.

In embodiments, matrix processor 120 outputs a set of convolution data, e.g., output array 122, while accumulating and computing the next set of convolution data. Similarly, pooling unit 140 generates output 106 on-the-fly from data shifted out of matrix processor 120, thus, covering the cost of pooling and reducing computation time when compared to software-based pooling methods, which require that a convolution be stored in intermediate storage prior to being passed through a pooling layer.

In embodiments, post-processing unit 130 receives data, e.g., a dot product result that corresponds to an output channel, from the bottom row of matrix processor 120, e.g., via output flip-flops (not shown) that form a shift register. Post-processing unit 130 may apply, e.g., a non-linear ReLU function to output array 122.

It is noted that padding, e.g., zero-padding, may be performed at the edges of a matrix prior to a convolution layer operation in order to obtain a predetermined output feature map size. In embodiments, padding may be enabled if the stride is set to a value greater than 1. If padding is enabled, control logic 150 may treat certain columns as zeros, such that the divisor in an average pooling operation is adjusted to equal the sum of the non-zero pooling values involved in the average calculation.

FIG. 2 is an exemplary block diagram of a pooling unit architecture according to various embodiments of the present disclosure. Pooling unit 200 may comprise row aligner 206, write aligner 204, pooling array 208, pooler 210. In embodiments, pooler 210 may comprise a max unit (not shown), averaging unit 212, or any other unit that may perform pooling operations to generate output 230. In embodiments, averaging unit 212 performs and averaging function by using summing element 214 followed by divide and or scale unit 216.

Input 202 may correspond to a set of feature maps. In embodiments, input 202 constitutes an output channel that has been produced according to the requirements of a high-efficiency matrix processor, for example, a matrix processor disclosed U.S. Pat. App. Serial No. 15/710,433 entitled "Accelerated Mathematical Engine".

In embodiments, pooling unit 200, in response to receiving input 202, reformats the data therein into the equivalent of a grid pattern to which conventional pooling methods are applied, for example, to reduce the height and width of the feature maps by a factor of two. In embodiments, pooling unit 200 accomplishes reformatting by arranging and storing input 202 (e.g., in row aligner 206) in a number of rows that have the same width as input 202, such that each row comprises sections of data that correspond to a group of neighborhood values in a matrix to which a pooling operation is applied to obtain a pooling result. In embodiments, once the rows are aligned such that those sections that belong to the same neighborhood can be extracted, pooling can be easily performed, e.g., by pooler 210. In embodiments, the combination of sections pooled in this manner represents a pooling result of an entire pooled output channel of a convolution.

In embodiments, row aligner 206 stores input 202 in such a way that it can be accessed and read by pooler 210 as to-be-pooled data. In other words, the output channel of the matrix processor may be reformatted to a format that can be read easily pooled by pooler 210 while maintaining a stream of input data 102. In embodiments, row aligner 206 is controlled by a controller (not shown) to shift incoming input 202 prior to writing the result into a number of pooling arrays 208, e.g., 3 arrays that comprise the to-be-pooled data.

In embodiments, pooler 210 identifies suitable values in row aligner 206 for use in a particular pooling calculation and extracts from pooling arrays 208 a number of values to compute a pooling result. The pooling result depends on the type of pooling function used and may be an average value, a maximum value, or an intermediate value (e.g., a sum) that may be converted into a suitable pooling result. In embodiments, divide and or scale unit 216 may follow averaging unit 212 and may be implemented as a multiply-and-shift circuit that generates output 230. In embodiments, pooler 210 may access pooling array 208 to process any subsection of pooling array 208 that comprises a number of to-be-pooled values. For example, e.g., pooler 210 may pool 9 values corresponding to a 3x3 pooling window to generate an average pooling value. It is understood that the pooling window may assume any arbitrary size and shape depending on parameters settings.

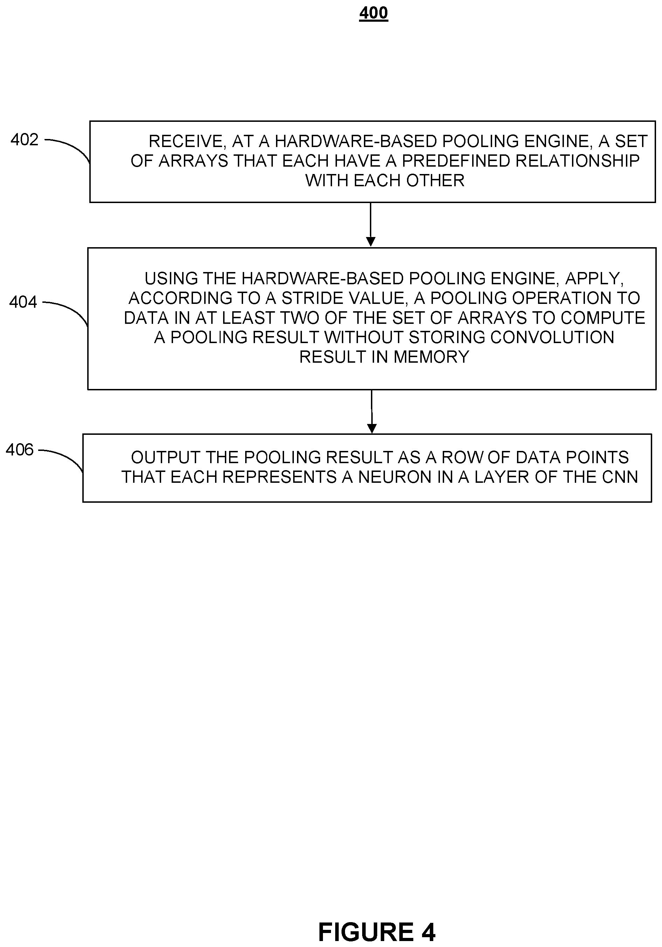

In embodiments, input 202 is read, and reformatting is applied over a period of *n* arithmetic cycles, e.g., using a method for aligning rows of data (further discussed with respect to FIG. 4) to generate pooling results 230 in every cycle, e.g., one row at a time. In embodiments, once an output channel is read, e.g., as input 202, the next output channel may be read and reformatting may be applied, for example, by using a different set of memory that stores the rows of data in a different pooler 212, until all output channels provided by the matrix processor are processed and the results 230 can be output. It is understood that portions of an output channel and, in general, different output channels may be processed at different times using other methods and other circuit configurations than those depicted in FIG. 2 and accompanying text. As those skilled in the art will appreciate, additional pooling layers may be used to output higher level or refined feature maps.

In embodiments, pooling unit 200 computes pooling results as fast as matrix processor 120 to generate output 122. Pooling unit 140 may apply a stride of, e.g., n=2 or n=3, to control the amount of elements the sliding window crosses between calculations. A person of skill in the art will appreciate that the sliding mechanism for pooling layers operates in a similar manner as that in a convolution layer that, for example, uses a common kernel size of 2 or 3, with the difference that the average or the largest value is selected in the pooling window.

In embodiments, pooling unit 200 receives the processed data and performs a computation on a set of arrays that may be spatially shifted relative to each other. In embodiments, pooling result 124 is pulled or shifted by a state machine (not shown) into an output array, e.g., one per clock cycle. The state machine may perform additional operations on pooling result 124 prior to sending data to SRAM 102 or some other post-processing unit (not shown).

It is understood that pooling unit 200 may further comprise components and sub-circuit circuits not shown in FIG. 2, such as a control unit that coordinates the sequence of operations of any number of components coupled with pooling unit 200. For example, the control unit may determine the number and location of data points that are involved in a given operation without modifying the sequence of the operation itself.

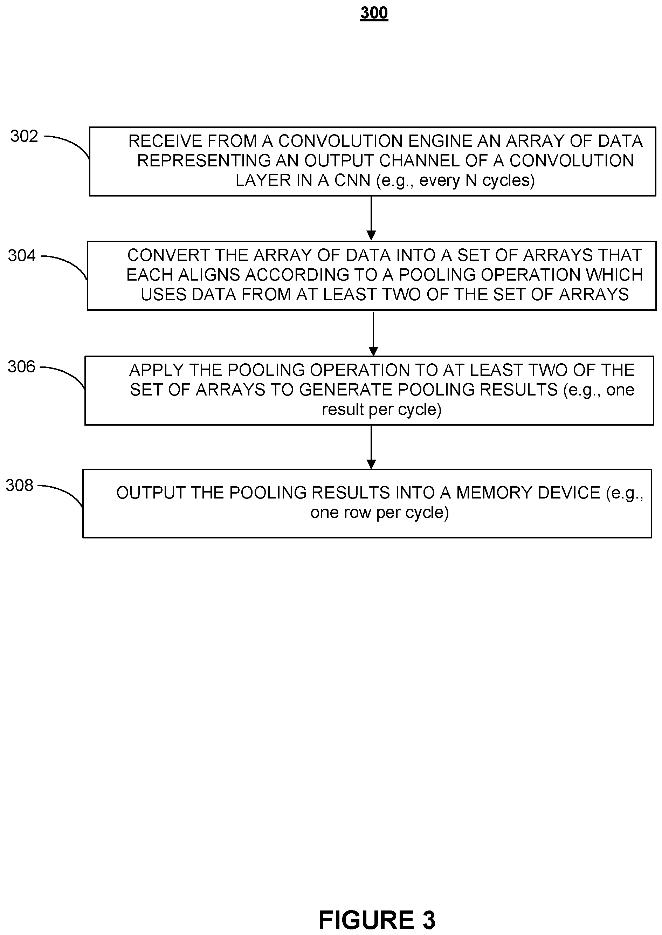

FIG. 3 is a flowchart of an illustrative process for using a pooling system shown in FIG. 1. Process 300 begins step 302 when data from a convolution engine is received at a pooling unit and at every n cycles. In embodiments, the data is received in the form of a data array and represents an output channel of a convolution layer in a CNN.

At step 304, the array is converted into a set of arrays that are aligned according to a pooling operation. In embodiments, the pooling operation uses at least two arrays from the set of arrays to apply a pooling operation, at step 306, to generate pooling results, e.g., one result per cycle.

Finally, at step 308, the pooling result is output, e.g., as one row per arithmetic cycle, into a memory device.

FIG. 4 is a flowchart of an illustrative process for using the pooling unit architecture shown in FIG. 2. Process 400 begins step 402 when a hardware-based pooling unit receives from a convolution engine a set of data arrays that each have a predefined relationship with each other.

At step 404, using the hardware-based pooling unit, a pooling operation is applied to data in at least two arrays from the set of data arrays to obtain a pooling result, e.g., an average or max pooling result. The pooling operation may be applied according to a stride value. In addition, this hardware-based pooling method takes advantage of a 1:1 output channel to input channel relationship that, advantageously eliminates the need to write a convolution result into intermediate memory.

At step 406, the pooling result is output, e.g., as one row of data points per cycle that each represent a neuron in a layer of the CNN.

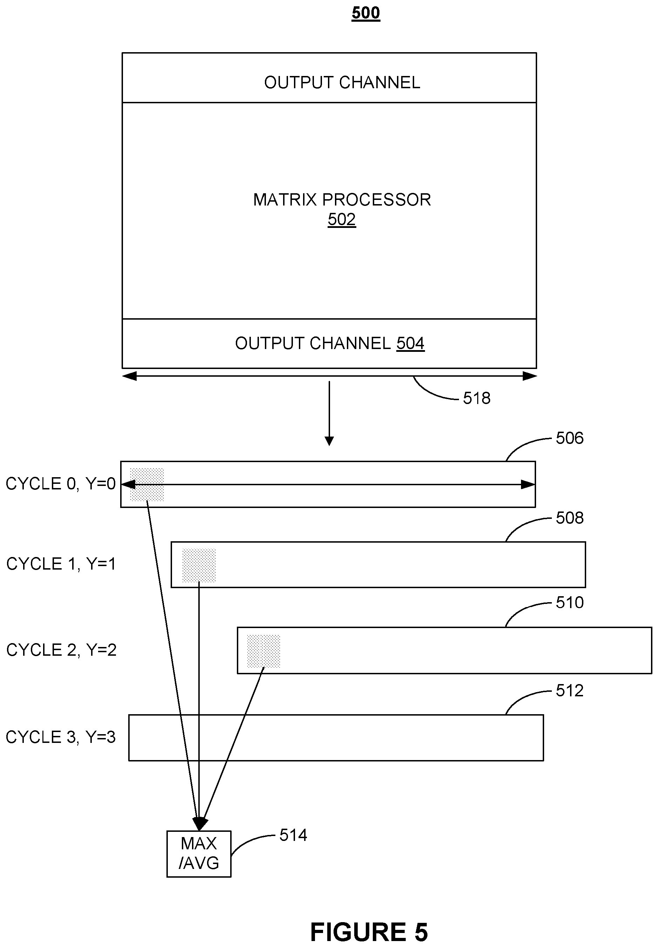

FIG. 5 is an exemplary block diagram illustrating a process for performing pooling using the pooling unit architecture shown in FIG. 2. In embodiments, the matrix processor 502 of the pooling unit architecture outputs output channel 504. Since a pooling operation may be treated as a convolution with fixed weights a matrix processor could be used to perform the pooling operation. However, since there is typically only a single output channel in pooling, operating only one output channel of multi-output channel matrix processor at a time is a rather inefficient undertaking that unnecessarily ties up computing resources. Therefore, to increase computing efficiency, in embodiments, output channel 504 may be written into a number of rows 506-510 that are aligned, e.g., by a row aligner as sown in FIG. 2, such that each row 506-510 is shifted against another in subsequent cycles. In embodiments, rows Y=0, Y=1, and Y=2 in FIG. 5 may hold output channel 504 and may have been written and stored in respective cycles 0 through 2.

For example, in a cycle 0, at least a first section of input 202 is stored, e.g., left aligned, into row Y=0. In the following cycle, cycle 1, the same section is stored into row Y=1, and so on, such that it takes three reading cycles to fill rows 506-510. Once rows 506-510 are populated, data from rows 506-510 can be combined to perform pooling calculations. For example, 3 values from each of row 506-510 may be combined to 9 values that generate pooling value 514 as a result.

It is noted that of pooling calculations may be performed in parallel. For example, to maintain a stream of incoming output channels 504, the number of pooling calculations may be equal to the total number of output channels in matrix processor 502, such that regardless of kernel size, pooling data corresponding to the entire width 518 of matrix processor 502 may be output.

In embodiments, the shift from one row to another corresponds to a shift of a pooling window when convolving across a matrix to generate pooling results. In embodiments, the shift that is attributable to the pooling window is defined by the number of cycles and may correspond to a stride having a value that is defined by the same number of cycles. In short, the stride dictates how often pooling data is output. For example, for a stride of 2, pooling values may be output every other cycle, thereby, skipping a row (or column) between outputs.

In embodiments, to create a sliding window of three rows of storage that slide one at a time, in a third cycle 512, the values of the first row 506 may be overwritten, such that the cycles use the set of three rows 506-510 and, based on pooling parameters, output a pooling calculation result.

It is understood that the number of rows of storage corresponds to the size of the kernel that is supported and that parameters such as window size, stride size, type of pooling used, etc., may be determined and controlled independent from the pooling process itself.

One skilled in the art will recognize no computing system or programming language is critical to the practice of the present invention. One skilled in the art will also recognize that a number of the elements described above may be physically and/or functionally separated into sub-modules or combined together.

It will be appreciated to those skilled in the art that the preceding examples and embodiments are exemplary and not limiting to the scope of the present disclosure.

## Claims

1. A hardware-based pooling unit architecture (200) comprising:
a controller;
an aligner (206) coupled to the controller and configured for, in response to receiving input data (202), aligning the input data into rows (506-510) having the same width (518) as the input data (202) to generate a pooling array (208), wherein each row comprises sections of data that correspond to a group of neighborhood values in a matrix, and, over a number of arithmetic cycles, shifting the rows (506-510) relative to each other to reformat the input data (202) into reformatted data, wherein the shift from one of the rows (506-510) to another one of the rows (506-510) corresponds to a shift of a pooling window that convolves across the matrix, the shift being defined by said number of arithmetic cycles, wherein the input data (202) is received by the aligner (206) in the form of a data array (122) from a matrix processor (120) and
represents an output channel (504) of a convolution layer in a convolutional neural network, wherein the aligner (206) is configured for reformatting the data array (122) into a grid format of the reformatted data such that some elements of the data array (122) are aligned in a horizontal direction and other elements of the data array (122) are aligned in a vertical direction; and
a pooler (210) coupled to the aligner (206), configured for applying, in subsequent arithmetic cycles, a pooling operation to at least some of the reformatted data to obtain a pooling output (230) that comprises a pooling value (514), wherein the pooler (210) is configured to output the pooling value (514) every number of cycles corresponding to said number of arithmetic cycles, and
wherein a subset of data from each row is combined to a set of data from which the pooling value (514) is generated.

2. The pooling unit according to claim 1, wherein the input data has been generated by the matrix processor (120).

3. The pooling unit according to claim 2, wherein, to maintain a stream of the input data, the pooling output (230) is generated at a same rate as a rate at which the matrix processor (120) generates the input data.

4. The pooling unit according to claim 2, wherein the pooler (210) performs one or more pooling calculations in parallel, and wherein the number of pooling calculations equals a number of output channels (504) in the matrix processor (120), such that, independent of a kernel size, the pooling output (230) corresponds to a width (518) of the matrix processor.

5. The pooling unit according to claim 1, further comprising a multiply-and-shift circuit (216) coupled to the pooler (210), the multiply-and-shift circuit (216) generates the pooling output (230) based on the pooling operation.

6. The pooling unit according to claim 1, wherein the input data (202) corresponds to a set of feature maps, and wherein the pooler (210) uses the reformatted input data to reduce, by a predetermined factor, at least one of a height and a width of the set of feature maps.

7. The pooling unit according to claim 1, further comprising a state machine that shifts the pooling output into an output array.

8. The pooling unit according to claim 1, wherein the controller determines, without modifying the sequence of the pooling operation itself, a number and a location of data points involved in a pooling operation.

9. A method (300) for using a hardware-based pooling system (200) according do claim 1, the method comprising:
receiving (302) from a matrix processor (120; 502), at intervals of a number of arithmetic cycles, a data array (122) that represents an output channel (504) of a convolution layer in a convolutional neural network;
converting (304) the data array (122) into a set of rows (506-512) having the same width (518) as the data array (202), wherein each row comprises sections of data that correspond to a group of neighborhood values in a matrix, wherein the set of rows (506-512) are aligned according to a pooling operation that applies data to at least two rows of the set of rows (506-512) for reformatting the data array (122) into reformatted data to generate (306) a pooling result (230) at each interval, wherein the reformatted data is reformatted into a grid format, such that some elements of the data array (122) are aligned in a horizontal direction and other elements of the data array (122) are aligned in a vertical direction, and wherein the set of rows (506-512) are shifted relative to each other over a number of arithmetic cycles, wherein the shift from one of the rows (506-510) to another one of the rows (506-510) corresponds to a shift of a pooling window that convolves across the matrix, the shift being defined by said number of arithmetic cycles; and
outputting (308), at each interval, the pooling result (230) into a memory device (102).

10. The method according to claim 9, wherein the array of data (122) corresponds to a set of feature maps.

## Patentansprüche

1. Hardwarebasierte Pooling-Einheitsarchitektur (200), die Folgendes aufweist:
eine Steuerung;
einen Ausrichter (206), der mit der Steuerung gekoppelt und dazu eingerichtet ist, als Reaktion auf das Empfangen von Eingangsdaten (202) die Eingangsdaten in Zeilen (506-510), die dieselbe Breite (518) wie die Eingangsdaten (202) aufweisen, auszurichten, um ein Pooling-Array (208) zu erzeugen, wobei jede Zeile Datenabschnitte aufweist, die einer Gruppe von Nachbarschaftswerten in einer Matrix entsprechen, und über eine Anzahl an arithmetischen Zyklen die Zeilen (506-510) im Verhältnis zueinander zu verschieben, um die Eingangsdaten (202) in umformatierte Daten umzuformatieren, wobei die Verschiebung von einer der Zeilen (506-510) zu einer anderen der Zeilen (506-510) einer Verschiebung eines Pooling-Fensters entspricht, das eine Faltung über die Matrix hinweg ausführt, wobei die Verschiebung durch die Anzahl an arithmetischen Zyklen definiert ist, wobei die Eingangsdaten (202) vom Ausrichter (206) in Form eines Datenarrays (122) von einem Matrixprozessor (120) empfangen werden und einen Ausgangskanal (504) einer Faltungsschicht in einem faltenden neuronalen Netzwerk darstellen, wobei der Ausrichter (206) dazu eingerichtet ist, das Datenarray (122) in ein Rasterformat der umformatierten Daten umzuformatieren, so dass einige Elemente des Datenarrays (122) in horizontaler Richtung ausgerichtet werden und andere Elemente des Datenarrays (122) in vertikaler Richtung ausgerichtet werden; und
einen Pooler (210), der mit dem Ausrichter (206) gekoppelt und dazu eingerichtet ist, in aufeinanderfolgenden arithmetischen Zyklen eine Pooling-Operation an mindestens einem Teil der umformatierten Daten anzuwenden, um einen Pooling-Ausgang (230) zu erhalten, der einen Pooling-Wert (514) aufweist, wobei der Pooler (210) dazu eingerichtet ist, den Pooling-Wert (514) in jeder der Anzahl an arithmetischen Zyklen entsprechenden Anzahl an Zyklen auszugeben, und
wobei ein Teilsatz von Daten aus jeder Zeile zu einem Datensatz zusammengeführt wird, aus dem der Pooling-Wert (514) erzeugt wird.

2. Pooling-Einheit nach Anspruch 1, wobei die Eingangsdaten von dem Matrixprozessor (120) erzeugt wurden.

3. Pooling-Einheit nach Anspruch 2, wobei zum Aufrechterhalten eines Datenstroms der Eingangsdaten der Pooling-Ausgang (230) mit derselben Rate erzeugt wird wie die Rate, mit der der Matrixprozessor (120) die Eingangsdaten erzeugt.

4. Pooling-Einheit nach Anspruch 2, wobei der Pooler (210) eine oder mehrere Pooling-Berechnungen parallel durchführt, und wobei die Anzahl an Pooling-Berechnungen der Anzahl an Ausgangskanälen (504) im Matrixprozessor (120) entspricht, so dass unabhängig von einer Kernelgröße der Pooling-Ausgang (230) einer Breite (518) des Matrixprozessors entspricht.

5. Pooling-Einheit nach Anspruch 1, die ferner eine Multiplikations- und Verschiebungsschaltung (216) aufweist, die mit dem Pooler (210) gekoppelt ist, wobei die Multiplikations- und Verschiebungsschaltung (216) den Pooling-Ausgang (230) basierend auf der Pooling-Operation erzeugt.

6. Pooling-Einheit nach Anspruch 1, wobei die Eingangsdaten (202) einem Satz von Merkmalskarten entsprechen, und wobei der Pooler (210) die umformatierten Eingangsdaten verwendet, um die Höhe und/oder die Breite des Satzes von Merkmalskarten um einen vorbestimmten Faktor zu reduzieren.

7. Pooling-Einheit nach Anspruch 1, die ferner eine Zustandsmaschine aufweist, die den Pooling-Ausgang in ein Ausgangsarray verschiebt.

8. Pooling-Einheit nach Anspruch 1, wobei die Steuerung eine Anzahl und eine Position von an einer Pooling-Operation beteiligten Datenpunkten bestimmt, ohne dabei den Ablauf der Pooling-Operation selbst zu verändern.

9. Verfahren (300) zum Verwenden eines hardwarebasierten Pooling-Systems (200) nach Anspruch 1, wobei das Verfahren Folgendes umfasst:
Empfangen (302) eines Datenarrays (122), das einen Ausgangskanal (504) einer Faltungsschicht in einem faltenden neuronalen Netzwerk darstellt, von einem Matrixprozessor (120; 502) in Intervallen von einer Anzahl an arithmetischen Zyklen;
Umwandeln (304) des Datenarrays (122) in einen Satz von Zeilen (506-512), der dieselbe Breite (518) wie das Datenarray (202) aufweist, wobei jede Zeile Datenabschnitte aufweist, die einer Gruppe von Nachbarschaftswerten in einer Matrix entsprechen, wobei der Satz von Zeilen (506-512) gemäß einer Pooling-Operation ausgerichtet wird, die Daten auf mindestens zwei
Zeilen des Satzes von Zeilen (506-512) anwendet, um das Datenarray (122) in umformatierte Daten umzuformatieren, um in jedem Intervall einen Pooling-Ausgang (230) zu erzeugen (306), wobei die umformatierten Daten in ein Rasterformat umformatiert werden, so dass einige Elemente des Datenarrays (122) in horizontaler Richtung ausgerichtet werden und andere Elemente des Datenarrays (122) in vertikaler Richtung ausgerichtet werden, und wobei der Satz von Zeilen (506-512) im Verhältnis zueinander über eine Anzahl an arithmetischen Zyklen verschoben werden, wobei die Verschiebung von einer der Zeilen (506-510) zu einer anderen der Zeilen (506-510) einer Verschiebung eines Pooling-Fensters entspricht, das eine Faltung über die Matrix hinweg ausführt, wobei die Verschiebung durch die Anzahl an arithmetischen Zyklen definiert ist; und
Ausgeben (308) des Pooling-Ausgangs (230) in jedem Intervall in eine Speichervorrichtung (102).

10. Verfahren nach Anspruch 9, wobei das Datenarray (122) einem Satz von Merkmalskarten entspricht.

## Revendications

1. Une architecture d'unité de pool matériel (200) comprenant :
un contrôleur ;
un aligneur (206) couplé au contrôleur et configuré pour, en réponse à la réception de données d'entrée (202), aligner les données d'entrée en lignes (506-510) ayant la même largeur (518) que les données d'entrée (202) afin de générer un tableau de pool (208), dans lequel chaque ligne comprend des sections de données qui correspondent à un groupe de valeurs voisines dans une matrice, et, sur un certain nombre de cycles arithmétiques, décaler les lignes (506-510) les unes par rapport aux autres afin de reformater les données d'entrée (202) en données reformatées, le décalage d'une des lignes (506-510) vers une autre des lignes (506-510) correspondant à un décalage d'une fenêtre de pool qui convolue à travers la matrice, le décalage étant défini par ledit nombre de cycles arithmétiques, dans lequel les données d'entrée (202) sont reçues par l'aligneur (206) sous la forme d'un tableau de données (122) provenant d'un processeur matriciel (120) et représentent un canal de sortie (504) d'une couche de convolution dans un réseau de neurones convolutifs, dans lequel l'aligneur (206) est configuré pour reformater le tableau de données (122) en un format de grille des données reformatées de sorte que certains éléments du tableau de données (122) sont alignés dans une direction horizontale et d'autres éléments du tableau de données (122) sont alignés dans une direction verticale ; et
une unité de pool (210) couplée à l'aligneur (206), configurée pour appliquer, lors de cycles arithmétiques successifs, une opération de pool à au moins une partie des données reformatées afin d'obtenir une sortie de pool (230) qui comprend une valeur de pool (514), dans laquelle l'unité de pool (210) est configurée pour effectuer la sortie de la valeur de pool (514) tous les nombres de cycles correspondant audit nombre de cycles arithmétiques, et dans lequel un sous-ensemble de données de chaque ligne est combiné à un ensemble de données à partir duquel la valeur de pool (514) est générée.

2. L'unité de pool selon la revendication 1, dans laquelle les données d'entrée ont été générées par le processeur matriciel (120).

3. L'unité de pool selon la revendication 2, dans laquelle, pour maintenir un flux des données d'entrée, la sortie de pool (230) est générée à un même débit que le débit auquel le processeur matriciel (120) génère les données d'entrée.

4. L'unité de pool selon la revendication 2, dans laquelle l'unité de pool (210) effectue un ou plusieurs calculs de pool en parallèle, et dans laquelle le nombre de calculs de pool est égal au nombre de canaux de sortie (504) dans le processeur matriciel (120), de sorte que, indépendamment d'une taille de noyau, la sortie de pool (230) correspond à une largeur (518) du processeur matriciel.

5. L'unité de pool selon la revendication 1, comprenant en outre un circuit de multiplication et de décalage (216) couplé à l'unité de pool (210), le circuit de multiplication et de décalage (216) générant la sortie de pool (230) sur la base de l'opération de pool.

6. L'unité de pool selon la revendication 1, dans laquelle les données d'entrée (202) correspondent à un ensemble de cartes de caractéristiques, et dans laquelle l'unité de pool (210) utilise les données d'entrée reformatées pour réduire, par un facteur prédéterminé, au moins l'une d'une hauteur et d'une largeur de l'ensemble de cartes de caractéristiques.

7. L'unité de pool selon la revendication 1, comprenant en outre une machine d'états qui décale la sortie de pool dans un tableau de sortie.

8. L'unité de pool selon la revendication 1, dans laquelle le contrôleur détermine, sans modifier la séquence de l'opération de pool elle-même, un nombre et un emplacement de points de données impliqués dans une opération de pool.

9. Un procédé (300) d'utilisation d'un système de pool matériel (200) selon la revendication 1, le procédé comprenant :
la réception (302) à partir d'un processeur matriciel (120 ; 502), à des intervalles d'un certain nombre de cycles arithmétiques, d'un tableau de données (122) qui représente un canal de sortie (504) d'une couche de convolution dans un réseau de neurones convolutifs ;
la conversion (304) du tableau de données (122) en un ensemble de lignes (506-512) ayant la même largeur (518) que le tableau de données (202), dans lequel chaque ligne comprend des sections de données qui correspondent à un groupe de valeurs voisines dans une matrice, dans lequel l'ensemble de lignes (506-512) est aligné selon une opération de pool qui applique des données à au moins deux lignes de l'ensemble de lignes (506-512) pour reformater le tableau de données (122) en données reformatées afin de générer (306) un résultat de pool (230) à chaque intervalle, dans lequel les données reformatées sont reformatées en un format de grille, de sorte que certains éléments du tableau de données (122) sont alignés dans une direction horizontale et d'autres éléments du tableau de données (122) sont alignés dans une direction verticale, et dans lequel l'ensemble de lignes (506-512) est décalé les unes par rapport aux autres sur un certain nombre de cycles arithmétiques, dans lequel le décalage d'une des lignes (506-510) vers une autre des lignes (506-510) correspond à un décalage d'une fenêtre de pool qui convolue à travers la matrice, le décalage étant défini par ledit nombre de cycles arithmétiques ; et
la sortie (308), à chaque intervalle, du résultat de pool (230) dans un dispositif de mémoire (102).

10. Le procédé selon la revendication 9, dans lequel le tableau de données (122) correspond à un ensemble de cartes de caractéristiques.
